# EUROPÄISCHE PATENTANMELDUNG

(11) **EP 3 351 468 A1**
(43) Veröffentlichungstag der Anmeldung: **25.07.2018**
(21) Anmeldenummer: 18152502.3
(22) Anmeldetag: 19.01.2018
(51) Int. Cl.: B62K 3/00, B62K 5/08, B62K 5/02

(54) **FAHRZEUG**

(30) Priorität: 23.01.2017 DE 102017101162
(71) Anmelder: Bielfeldt, Holm, 21465 Reinbek (DE)
(72) Erfinder: Bielfeldt, Holm, 21465 Reinbek (DE)
(74) Vertreter: Raffay & Fleck

(57) **Zusammenfassung**

Die vorliegende Erfindung betrifft ein durch Gewichtsverlagerung lenkbares Fahrzeug sowie ein Lenkverfahren.

Es ist bekannt, Fahrzeuge mittels Gewichtsverlagerung zu lenken. Der Erfindung liegt die Aufgabe zugrunde, eine angenehme Sitzposition während der Fahrt zu ermöglichen, ohne dass die Hände benötigt werden und ein Fahren bei mehr als 20km/h sicher zu ermöglichen.

Die Aufgabe wird beim Fahrzeug gelöst durch eine Lenkachse (3), die eine Neigung von 20° bis 80° gegen die Horizontale aufweist, mindestens ein Dämpfungs- und/oder Rückstellelement (5), das eine dämpfende und/oder rückstellende Kraft auf eine Auslenkung der Hinterachse ausübt, wobei die dämpfende und/oder rückstellende Kraft in einer Ebene senkrecht zur Lenkachse (3) oder mit einem Winkel von kleiner als 30°, insbesondere kleiner als 20°, zu der Ebene senkrecht zur Lenkachse (3) verläuft und/oder das Dämpfungs- und/oder Rückstellelement (5) mit seiner Längserstreckung in einer Ebene senkrecht zur Lenkachse (3) oder mit einem Winkel von kleiner als 30° zu der Ebene senkrecht zur Lenkachse (3) verläuft.

## Beschreibung

Die vorliegende Erfindung betrifft ein durch Gewichtsverlagerung lenkbares Fahrzeug sowie ein Verfahren zur Lenkung des erfindungsgemäßen Fahrzeugs durch Gewichtsverlagerung.

Im Stand der Technik sind derartige Fahrzeuge für verschiedene Anwendungsfälle bekannt. So ist aus der US 4 941 670 ein System bekannt, durch das mittels Gewichtsverlagerung ein Roller lenkbar ist. Allerdings ist das Fahren auf diesem Roller wenig komfortabel und auch ist es notwendig sich ggf. an dem Handgriff festzuhalten, sodass der Benutzer die Hände nicht unbedingt immer frei hat, um andere Tätigkeiten auszuführen, bspw. einen Drachen, Gleitschirm oder dgl. zu steuern. Auch ist das Lenken bei hohen Geschwindigkeiten nur unzuverlässig bzw. sturzanfällig möglich. Komfortablere Fahrzeuge stellen hierbei Liegefahrräder dar, die einen tief liegenden Sitz mit Rückenlehne und vorne angebrachten Pedalen aufweisen. Allerdings werden diese Liegeräder über einen Lenker gelenkt, der mit den Händen zu betätigen ist. Somit hat der Benutzer auch hier die Hände nicht frei.

Der Erfindung liegt daher die Aufgabe zugrunde ein Fahrzeug der bekannten Art derart anzupassen, dass es eine angenehme Sitzposition während der Fahrt ermöglicht, der Benutzer aber durchgängig auch die Hände frei hat, um weitere Tätigkeiten ausführen zu können oder auch ein Benutzer ohne Hände das Fahrzeug lenken kann und auch dass ein Lenken durch Gewichtsverlagerung bei höheren Geschwindigkeiten, zum Beispiel bei mehr als 20km/h sicher möglich ist.

Die Aufgabe wird gelöst durch ein Fahrzeug mit den Merkmalen des Anspruchs 1. Vorteilhafte Weiterbildungen eines solchen in den abhängigen Ansprüchen 2 bis 13 bezeichnet. Gelöst wird die Aufgabe auch durch ein Verfahren zum Lenken eines Fahrzeugs durch Gewichtsverlagerung mit den Merkmalen des Anspruchs 14. Eine vorteilhafte Weiterbildung dieses Verfahrens ist in dem abhängigen Anspruch 15 bezeichnet.

Bei einem Fahrzeug umfassend mindestens zwei Reibungsverminderungsmittel, die an einer gemeinsamen Hinterachse und/oder gemeinsamen steifen Querstruktur befestigt sind und/oder steif miteinander verbunden sind, eine tragende Struktur, die über eine Lenkachse mit der Hinterachse und/oder gemeinsamen steifen Querstruktur und/oder den mindestens zwei Reibungsverminderungsmitteln schwenkbar verbunden ist und die durch Gewichtsverlagerung in eine Schrägstellung bringbar ist, und mindestens ein Dämpfungs- und/oder Rückstellelement, besteht der erfindungsgemäße Ansatz darin, dass die Lenkachse eine Neigung von 20° bis 80°, insbesondere von 40° bis 70° gegen die Horizontale aufweist, und dass das mindestens eine Dämpfungs- und/oder Rückstellelement so angeordnet ist, dass das Dämpfung- und/oder Rückstellelement eine dämpfende und/oder rückstellende Kraft auf eine Auslenkung der Hinterachse und/oder gemeinsamen steifen Querstruktur und/oder der Reibungsverminderungsmittel ausübt und die dämpfende und/oder rückstellende Kraft in einer Ebene senkrecht zu der Lenkachse oder mit einem Winkel von kleiner als 30°, insbesondere kleiner als 20°, zu der Ebene senkrecht zur Lenkachse verläuft und/oder das Dämpfungs- und/oder Rückstellelement mit seiner Längserstreckung in einer Ebene senkrecht zur Lenkachse oder mit einem Winkel von kleiner 30°, insbesondere kleiner 20°, zu der Ebene senkrecht zur Lenkachse verläuft.

Dabei wird der Winkel der Neigung insbesondere ausgehend von der Lenkachse in seitlicher Ansicht auf das Fahrzeug mit Vorwärtsfahrrichtung nach links im Uhrzeigersinn bis zur Horizontalen gemessen. Die Vorwärtsfahrrichtung ist insbesondere die Richtung von der Lenkachse in Richtung eines weiteren Reibungsverminderungsmittels, bei mehreren weiteren Reibungsverminderungsmitteln in Richtung deren Mittelpunkt. Der Winkel der Neigung der Lenkachse kann insbesondere auch ausgehend von der Lenkachse in seitlicher Ansicht auf das Fahrzeug in Richtung von einem weiteren Reibungsverminderungsmittel weg bis zur Horizontalen gemessen werden.

Auf und/oder an der tragenden Struktur ist insbesondere eine Aufnahme für ein Lebewesen vorgesehen, insbesondere eine Sitzfläche und/oder ein Sitz mit Rückenlehne.

D.h. die Verbindung von tragender Struktur mit der Hinterachse und/oder gemeinsamen steifen Querstruktur und/oder den mindestens zwei Reibungsverminderungsmitteln durch eine Lenkachse erlaubt eine Lenkung der Hinterachse und/oder gemeinsamen steifen Querstruktur und/oder der mindestens zwei Reibungsverminderungsmittel dadurch, dass die tragende Struktur aus einer, insbesondere waagerechten, Ruhelage heraus in eine Schrägstellung bringbar ist infolge einer Gewichtsverlagerung des auf der tragenden Struktur befindlichen Benutzers. Wenn also beispielsweise der auf der tragenden Struktur befindliche Benutzer die Fahrtrichtung des erfindungsgemäßen Fahrzeuges nach rechts verändern will, braucht er lediglich sein Gewicht auf die rechte Seite der tragenden Struktur zu verlagern, um diese aus der waagerechten Ruhelage heraus in eine Schrägstellung zu bringen. Diese Schrägstellung der tragenden Struktur bedingt durch die erfindungsgemäße Lenkachse eine Verschwenkung gegenüber der Hinterachse und/oder gemeinsamen steifen Querstruktur und/oder der mindestens zwei Reibungsverminderungsmittel in der Weise, dass diese aus ihrer die Geradeaus-Fahrtrichtung festlegenden Position ausgelenkt wird/werden, mit der Folge, dass sich die Fahrtrichtung in eine Rechtskurve verändert. Dies lässt sich durch Austausch von rechts gegen links auf den Fall einer Linkskurve übertragen.

Da bei dem erfindungsgemäßen Fahrzeug die gewünschte Änderung der Fahrtrichtung, also die Lenkung durch eine einfache Gewichtsverlagerung des Benutzers auf der tragenden Struktur bewerkstelligt werden kann, hat der Benutzer durchgängig die Hände frei, um weitere Tätigkeiten ausführen zu können.

Ein Fahrzeug umfasst hierbei insbesondere ein Liegerad, das per Muskelkraft und/oder Elektromotor angetrieben oder unterstützt wird, einen Kite-Buggy, welches ein von einem Drachen ziehbares antriebsloses Fahrzeug darstellt, einen Gleitschirmflieger aufweisend einen Propeller und/oder Strandsegler aufweisend einen Mast.

Eine gemeinsame steife Querstruktur kann eine oder mehrere Hinterachsen aufnehmen oder mit Ihnen steif aber um die Hinterachsen rotierbar verbunden sein. Sie kann insbesondere Lager zur Lagerung mindestens einer Hinterachse aufweisen. Die Hinterachse oder gemeinsame steife Querstruktur kann aber auch derart ausgebildet sein, dass sich Hinterräder um sie drehen.

Eine tragende Struktur beinhaltet insbesondere einen Sitz, insbesondere einen steifen Sitz, insbesondere mit Sitzfläche und/oder Rückenlehne, ein Dreieckssitztuch mit Haltestruktur für das Sitztuch oder ein Sitztuch mit Haltestruktur für das Sitztuch, insbesondere mit Sitzplatte und/oder Rückenplatte.

Eine Gewichtsverlagerung bedeutet die Gewichtsverlagerung eines auf der tragenden Struktur befindlichen Benutzers hin zu der rechten oder linken Seite des Fahrzeugs.

Schrägstellung bedeutet, dass die tragende Struktur aus einer, insbesondere im Wesentlichen waagerechten, Ruhestellung in eine davon abweichende Stellung gebracht wird, dabei ist die tragende Struktur in der Schrägstellung insbesondere um einen Winkel von größer 0° bis 60°, insbesondere 0 bis 45°, von der horizontalen Ruhestellung verdreht, insbesondere lässt das Fahrzeug eine Schrägstellung um mindestens 45° insbesondere mindestens 60° zu.

Das mindestens eine Dämpfungs-und/oder Rückstellelement umfasst insbesondere mindestens eine Feder und/oder mindestens einen Schwingungsdämpfer.

Die durch das Dämpfungs- und/oder Rückstellelement ausgeübte dämpfende und/oder rückstellende Kraft bewirkt, dass bei einer Lageänderung der tragenden Struktur ein gewisser Widerstand entgegengesetzt wird und so eine ungewollte Fahrtrichtungsänderung vermieden werden kann und oder, dass eine Rückstellkraft in Richtung Ruhelage aufgebracht wird, die ein Zurückkehren in die Ruhelage erleichtert. Die Ruhelage ist insbesondere dadurch gekennzeichnet, dass das Fahrzeug in der Ruhelage geradeaus fährt und/oder das mindestens eine Rückstellelement ohne Einwirkung anderer Kräfte das Fahrzeug in die Ruhelage bringt und/oder in dieser hält.

In einer vorteilhaften Variante kann die Lenkachse, insbesondere über ein Verbindungselement, mit der Hinterachse und/oder gemeinsamen steifen Querstruktur und/oder den mindestens zwei Reibungsverminderungsmitteln verbunden sein. Dabei kann insbesondere die Lenkachse und steif mit der Hinterachse oder der gemeinsamen steifen Querstruktur verbunden sein und eine Lagerung dieser Lenkachse wiederum mit der tragenden Struktur steif verbunden sein.

Bei einer alternativen bevorzugten Ausführungsform kann die Hinterachse oder die gemeinsame steife Querstruktur eine Lagerung der Lenkachse beinhalten oder mit dieser Lagerung fest verbunden sein, während die Lenkachse, insbesondere über ein Verbindungselement, Lagerung gelagerte Achse mit der tragenden Struktur verbunden ist.

Auch kann das Fahrzeug weiter mindestens ein weiteres Reibungsverminderungsmittel und/oder eine Vorderachse umfassen, wobei das weitere Reibungsverminderungsmittel und/oder die Vorderachse steif mit der tragenden Struktur verbunden ist und/oder bei einer Auslenkung der Hinterachse und/oder gemeinsamen steifen Querstruktur und/oder der mindestens zwei Reibungsverminderungsmitteln ausschwenkt.

Des Weiteren kann die Sitzfläche und/oder die tragende Struktur zumindest teilweise unterhalb einer Verbindungsebene zwischen einem obersten Punkt des weiteren Reibungsverminderungsmittel und der Hinterachse und/oder gemeinsamen steifen Querstruktur und/oder dem obersten Punkte der mindestens zwei Reibungsverminderungsmittel angeordnet sein.

Auch kann die Sitzfläche zumindest teilweise unterhalb einer Verbindungsebene zwischen einer Rotationsachse des weiteren Reibungsverminderungsmittels und der Hinterachse und/oder gemeinsamen steifen Querstruktur und/oder der Hinterachse der mindestens zwei Reibungsverminderungsmittel angeordnet sein.

In einer weiteren vorteilhaften Variante kann das mindestens eine Dämpfungs- und/oder Rückstellelement zwischen der tragenden Struktur und der Hinterachse und/oder gemeinsamen steifen Querstruktur und/oder den mindestens zwei Reibungsverminderungsmitteln angeordnet sein. D.h. das mindestens eine Dämpfungs- und/oder Rückstellelement ist mit einem Ende an der tragenden Struktur befestigt und mit einem anderen Ende an der Hinterachse und/oder gemeinsamen steifen Querstruktur und/oder den mindestens zwei Reibungsverminderungsmitteln.

Auch kann die Längserstreckung des mindestens einen Dämpfungs- und/oder Rückstellelements und/oder die dämpfende und/oder rückstellende Kraft senkrecht oder in einem Winkel von 90° bis 45°, insbesondere von 90° bis 60°, insbesondere von 90° bis 70° zu mindestens einer Hinterachse und/oder gemeinsamen steifen Querstruktur verlaufen, insbesondere in Ruhelage gemessen.

Weiter kann das Fahrzeug mindestens zwei Dämpfungs- und/oder Rückstellelemente umfassen, wobei mindestens je eins der mindestens zwei Dämpfungs- und/oder Rückstellelemente zu beiden Seiten der Lenkachse mit der tragenden Struktur verbunden ist. Insbesondere ist die Lenkachse mittig an der Querstruktur oder Hinterachse befestigt, betrachtet über die Breite der Querstruktur quer zur Geradeaus-Fahrtrichtung des Fahrzeuges. Insbesondere ist ein Dämpfungs-und/oder Rückstellelement mit einem Ende auf einer ersten Seite von der Lenkachse an der Querstruktur befestigt und ein zweites Dämpfungs- und/oder Rückstellelement mit einem Ende auf einer der ersten Seite relativ zur Lenkachse gegenüberliegenden Seite an der gemeinsamen Querstruktur befestigt. Insbesondere schließt jedes Dämpfungs- und/oder Rückstellelement und die Querstruktur auf der Seite zur Lenkachse hin jeweils in der Aufsicht von oben einen Winkel von 45° bis 90° ein.

In einer weiteren vorteilhaften Variante kann die Hinterachse und/oder gemeinsame steife Querstruktur und/oder die mindestens zwei Reibungsverminderungsmittel nur über die Lenkachse und das mindestens eine Dämpfungs- und/oder Rückstellelement mit der tragenden Struktur gekoppelt sein oder die Hinterachse und/oder gemeinsame steife Querstruktur mit keiner weiteren Lenkvorrichtung verbunden sein. D.h. das Fahrzeug weist nur eine Lenkvorrichtung, nämlich die Lenkachse auf. Das Fahrzeug wird somit lediglich über die Lenkachse gesteuert. Mit besonderem Vorteil ist die Hinterachse und/oder die gemeinsame steife Querstruktur allein über die Dämpfungs- und/oder Rückstellelemente und/oder die Lenkachse mit der der tragenden Struktur verbunden und/oder gekoppelt. Mit besonderem Vorteil ist die Hinterachse und/oder die gemeinsame steife Querstruktur nicht mit einem Lenkseil und/oder nicht mit einer Lenkkette und/oder nicht mit einem Lenkmittel gekoppelt und/oder verbunden.

Mit besonderem Vorteil ist die Hinterachse und/oder gemeinsame steife Querstruktur und/oder sind die mindestens zwei Reibungsverminderungsmittel gegenüber der tragenden Struktur um die Lenkachse schwenkbar. Insbesondere besteht zwischen der tragenden Struktur und der Hinterachse und/oder gemeinsamen steifen Querstruktur Bewegungsfreiheit ausschließlich durch Schwenken und/oder Drehen um die Lenkachse und/oder zwischen der tragenden Struktur und den mindestens zwei Reibungsverminderungsmitteln Bewegungsfreiheit ausschließlich durch Schwenken und/oder Drehen um die Lenkachse und Drehen der Reibungsverminderungsmittel um ihre Rotationsachsen.

Mit besonderem Vorteil ist die tragende Struktur und/oder die Sitzfläche steif mit der Lenkachse und/oder abgesehen von der Bewegungsfreiheit durch die Schwenkbarkeit und/oder Drehbarkeit um die Lenkachse steif mit der Hinterachse und/oder der gemeinsamen steifen Querstruktur verbunden.

Die Reibungsverminderungsmittel können ausgebildet sein als Räder, Skier und/oder Kufen. Dabei können insbesondere zumindest die mindestens zwei Reibungsverminderungsmittel gleich ausgebildet sein und/oder alle Reibungsverminderungsmittel gleich ausgebildet sein.

Des Weiteren kann das Fahrzeug über mindestens ein Pedal und/oder einen Elektromotor angetrieben werden, wobei das mindestens eine Pedal und/oder der Elektromotor insbesondere das mindestens eine weitere Rad und/oder die mindestens zwei weiteren Räder antreibt. Über das mindestens eine Pedal wirkt die mit den Beinen ausgeübte Antriebskraft des Benutzers, der die an den rotierenden Pedalen befestigten Tretkurbeln wechselweise nach unten und/oder vorne drückt. Das Fahrzeug wird dabei insbesondere von einem mitrotierenden Kettenblatt über eine Kette angetrieben.

Auch kann die Sitzfläche und/oder die tragende Struktur zumindest teilweise unterhalb einer Ebene angeordnet sein, die tangential zu dem obersten Punkt der mindestens zwei Räder verläuft, wenn die Reibungsverminderungsmittel als Räder ausgebildet sind.

In einem weiteren Aspekt der Erfindung wird ein Verfahren zum Lenken eines Fahrzeugs durch Gewichtsverlagerung offenbart, wobei das Fahrzeug
- mindestens zwei Reibungsverminderungsmittel umfasst, die an einer gemeinsamen Hinterachse und/oder gemeinsamen steifen Querstruktur befestigt sind und/oder steif miteinander verbunden sind und eine tragende Struktur umfasst, die über eine Lenkachse mit der Hinterachse und/oder gemeinsamen steifen Querstruktur und/oder den mindestens zwei Reibungsverminderungsmitteln schwenkbar verbunden ist und die durch Gewichtsverlagerung aus einer Ruhelage in eine Schrägstellung bringbar ist, und
- mindestens ein Dämpfungs- und/oder Rückstellelement umfasst, wobei die Lenkachse eine Neigung von 20° bis 80°, insbesondere von 40° bis 70°, gegen die Horizontale aufweist, und wobei das mindestens eine Dämpfungs- und/oder Rückstellelement so angeordnet ist, dass das Dämpfungs- und/oder Rückstellelement eine dämpfende und/oder rückstellende Kraft auf eine schwenkende Auslenkung der Hinterachse und/oder gemeinsamen steifen Querstruktur und/oder der Reibungsverminderungsmittel um die Lenkachse ausübt und die dämpfende und/oder rückstellende Kraft in einer Ebene senkrecht zur Lenkachse oder mit einem Winkel von kleiner 30°, insbesondere kleiner 20°, zu der Ebene senkrecht zur Lenkachse verläuft und/oder das Dämpfungs- und/oder Rückstellelement mit seiner Längserstreckung in einer Ebene senkrecht zur Lenkachse oder mit einem Winkel von kleiner 30° insbesondere kleiner 20°, zu der Ebene senkrecht zur Lenkachse verläuft, und bei dem Fahrzeug durch die Gewichtsverlagerung das schwenkende Auslenken der Hinterachse und/oder gemeinsamen steifen Querstruktur und/oder der Reibungsverminderungsmittel um die Lenkachse bewirkt wird.

Dabei kann die Gewichtsverlagerung eine Gewichtsverlagerung eines auf der tragenden Struktur befindlichen Lebewesens sein.

Mit besonderem Vorteil wird durch die Gewichtsverlagerung eine relative Bewegung zwischen tragender Struktur und Hinterachse und/oder gemeinsamer steifer Querstruktur ausschließlich als und/oder durch Drehen und/oder Schwenken um die Lenkachse bewirkt und/oder eine relative Bewegung zwischen tragender Struktur und den mindestens zwei Reibungsverminderungsmitteln ausschließlich als und/oder durch Drehen und/oder Schwenken um die Lenkachse und Drehen der Reibungsverminderungsmittel um ihre Rotationsachsen bewirkt. Mit besonderem Vorteil wird auf der tragenden Struktur ein Lebewesen angeordnet, insbesondere auf einer Sitzfläche und/oder einem eine Sitzfläche aufweisendem Sitz. Mit besonderem Vorteil wird ein Lenken des Fahrzeugs ausschließlich durch Gewichtsverlagerung bewirkt, insbesondere durch Gewichtsverlagerung des Gewichts des auf der tragenden Struktur angeordnet Lebewesens. Dabei wird insbesondere nicht die Anordnung des Lebewesens vollständig verändert, sondern wird insbesondere die Gewichtsverlagerung unter Beibehaltung der Position einzelner Abschnitte des Lebewesens vorgenommen. Insbesondere wird die Gewichtsverlagerung als eine laterale Gewichtsverlagerung bezogen auf das Lebewesen und/oder das Fahrzeug durchgeführt, insbesondere zumindest durch Verlagerung eines Oberkörpers des Lebewesens insbesondere unter Beibehaltung der Position eines Gesäßes des Lebewesens.

Mit besonderem Vorteil wird keine Betätigung eines Lenkers vorgenommen. Insbesondere wird eine Lenkung des Fahrzeuges nicht unter Verwendung der Extremitäten des Lebewesens, abgesehen zur Gewichtsverlagerung des Lebewesens, vorgenommen. Insbesondere werden die Extremitäten des Lebewesens nicht zur Betätigung eines Lenkers oder eines Fußsteuers verwendet.

Mit besonderem Vorteil wird das Lebewesen so auf dem Fahrzeug und/oder der tragenden Struktur angeordnet, dass ihr Massenschwerpunkt und/oder ihr Gesäß unterhalb einer Verbindungsebene zwischen einem obersten Punkt des weiteren Reibungsverminderungsmittel und der Hinterachse und/oder gemeinsamen steifen Querstruktur und/oder dem obersten Punkte der mindestens zwei Reibungsverminderungsmittel und/oder unterhalb einer Verbindungsebene zwischen einer Rotationsachse des weiteren Reibungsverminderungsmittels und der Hinterachse und/oder gemeinsamen steifen Querstruktur und/oder der Hinterachse der mindestens zwei Reibungsverminderungsmittel angeordnet ist.

Die in Bezug auf das Fahrzeug beschriebenen vorteilhaften Ausbildungen lassen sich auf das Verfahren und/oder das für die Durchführung verwendete Verfahren entsprechend übertragen. Insbesondere wird das Verfahren unter Verwendung eines erfindungsgemäßen Fahrzeugs durchgeführt.

Weitere Vorteile und Merkmale der Erfindung ergeben sich aus der nachstehenden Beschreibung verschiedener Ausführungsbeispiele anhand der beigefügten Figuren. Dabei zeigen:
- Figur 1: eine Seitenansicht des erfindungsgemäßen Fahrzeugs in einer Ausführungsvariante als Kite-Buggy;
- Figur 2: eine Draufsicht (in Richtung A) des erfindungsgemäßen Fahrzeugs in der Ausführungsvariante als Kite-Buggy.
- Figur 3: eine Ansicht (in Richtung B) des erfindungsgemäßen Fahrzeugs in der Ausführungsvariante als Kite-Buggy
- Figur 4: eine Seitenansicht des erfindungsgemäßen Fahrzeugs in einer Ausführungsvariante als Liegerad
- Figur 5: eine Draufsicht (in Richtung A) des erfindungsgemäßen Fahrzeugs in der Ausführungsvariante als Liegerad
- Figur 6: eine Ansicht (in Richtung B) des erfindungsgemäßen Fahrzeugs in der Ausführungsvariante als Liegerad
- Figur 7: eine Seitenansicht des erfindungsgemäßen Fahrzeugs in einer weiteren Ausführungsvariante als Liegerad
- Figur 8: eine Draufsicht (in Richtung A) des erfindungsgemäßen Fahrzeugs in der weiteren Ausführungsvariante als Liegerad
- Figur 9: eine Ansicht (in Richtung B) des erfindungsgemäßen Fahrzeugs in der weiteren Ausführungsvariante als Liegerad
- Figur 10: eine Seitenansicht des erfindungsgemäßen Fahrzeugs in der Ausführungsvariante als Liegerad mit Elektromotor
- Figur 11: eine Draufsicht (in Richtung A) des erfindungsgemäßen Fahrzeugs in der Ausführungsvariante als Liegerad mit Elektromotor
- Figur 12: eine Ansicht (in Richtung B) des erfindungsgemäßen Fahrzeugs in der Ausführungsvariante als Liegerad mit Elektromotor

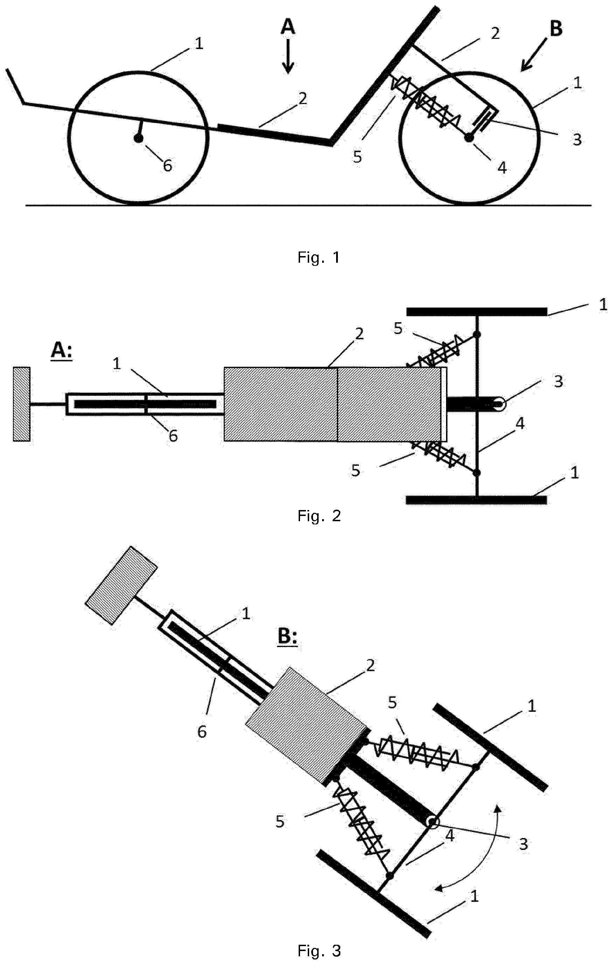

Figur 1 bis 3 zeigen das erfindungsgemäße Fahrzeug in einer ersten Ausführungsvariante als Kite-Buggy, d.h. das Fahrzeug kann von einem Drachen (nicht dargestellt), gezogen werden. Es sind die wesentlichen Bauteile dargestellt: drei Reibungsverminderungsmittel 1, die als Räder ausgeführt sind, eine tragende Struktur 2, die einen Sitz mit Rückenlehne aufweist, eine Lenkachse 3 und eine steife Querstruktur 4, die zwei hintere Räder verbindet, zwei Dämpfungs- und/oder Rückstellelemente 5, die als Feder- und Dämpfungselement ausgeführt sind, und eine Vorderachse 6, um die das vordere Rad 1 dreht und mit der die tragende Struktur 2 steif verbunden ist. Die Lenkachse 3 verbindet die Querstruktur 4 mit der tragenden Struktur 2 und lässt eine Rotation der

Querstruktur 4 relativ zur tragenden Struktur 2 um die Lenkachse 3 zu. Die Feder- und Dämpfungselemente 5 sind jeweils seitlich, rechts und links, an der tragenden Struktur 2 und der Querstruktur 4 angeordnet. Die Lenkachse 3 weist in der Darstellung eine Neigung von 50° gegen die Horizontale auf.

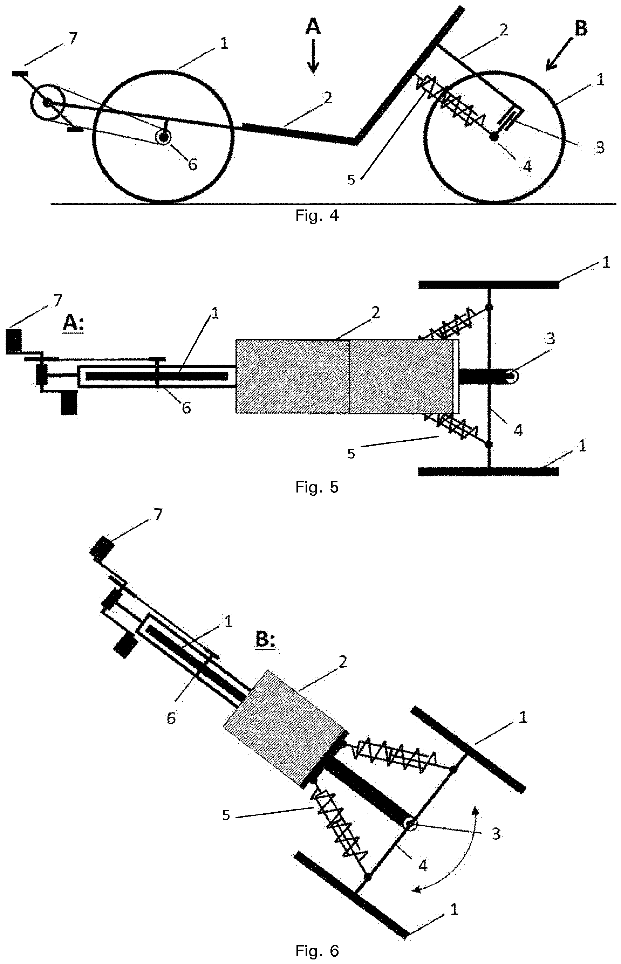

Figur 4 bis 6 zeigen das erfindungsgemäße Fahrzeug aufbauend auf der vorherigen Ausführung in einer zweiten Ausführungsvariante als Liegerad, d.h. das Fahrzeug wird mit Muskelkraft durch das Treten von Pedalen angetrieben, wobei ein Tretlager und Pedale 7 vorne an der tragenden Struktur 2 zum Antrieb des vorderen Rades 1 angebracht sind.

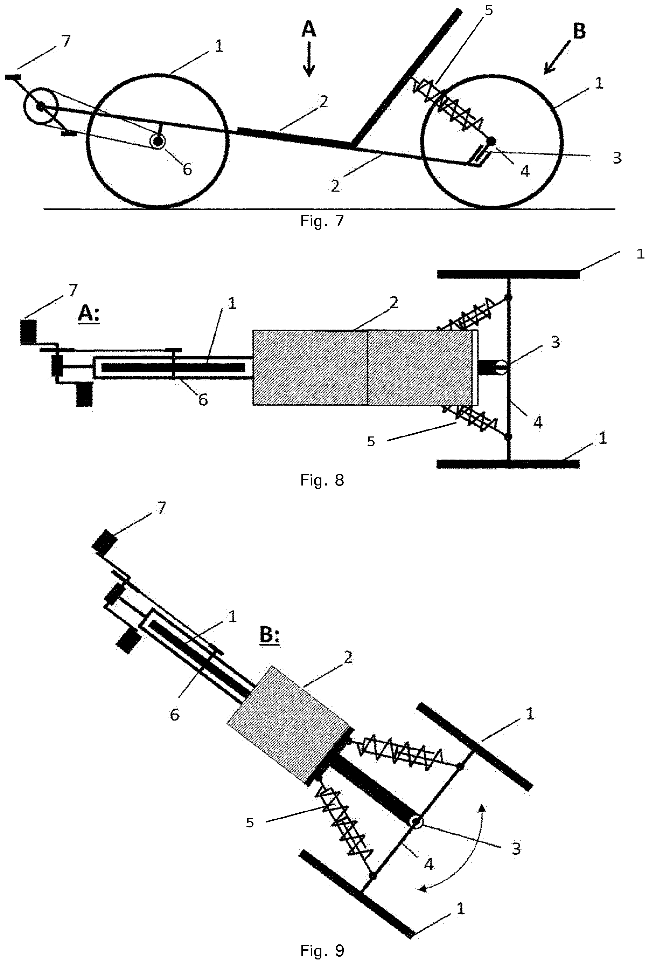

Figur 7 bis 9 zeigen das erfindungsgemäße Fahrzeug ausgehend von der zweiten Ausführungsvariante in einer dritten Ausführungsvariante als Liegerad.

In dieser Ausführungsvariante ist die Lenkachse 3 unterhalb der Querstruktur 4 an dieser angeordnet und verbindet diese mit der tragenden Struktur 2. Die Feder- und Dämpfungselemente 5 sind jeweils seitlich, rechts und links, an der tragenden Struktur 2 und der Querstruktur 4 befestigt.

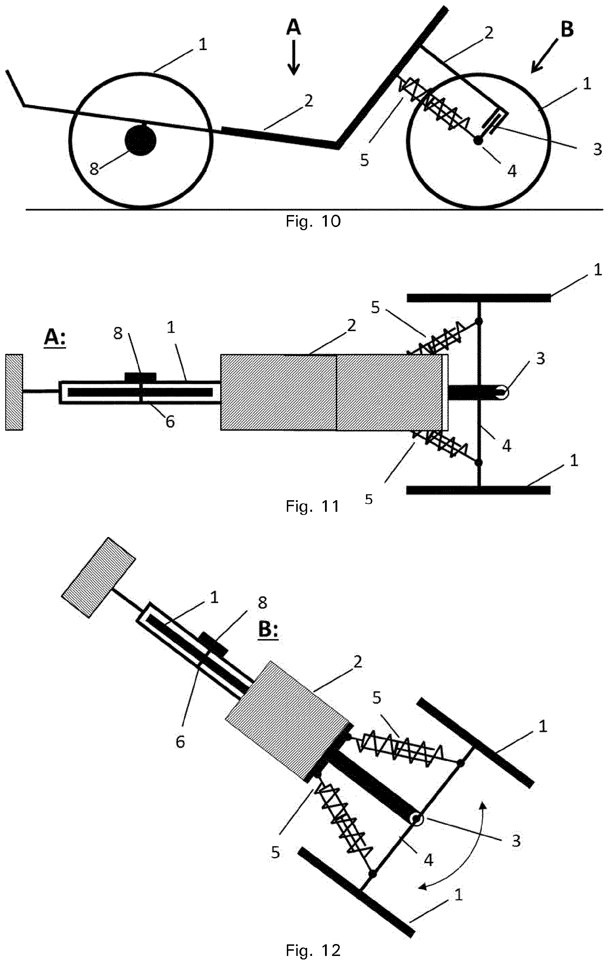

Figur 10 bis 12 zeigen das erfindungsgemäße Fahrzeug in einer vierten Ausführungsvariante ausgehend von der ersten Ausführungsvariante als Liegerad mit Elektromotor, der das vordere Rad 1 antreibt. Die Anordnung der Lenkachse entspricht der der ersten Ausführungsvariante.

### Bezugszeichen

- 1: Reibungsverminderungsmittel
- 2: tragende Struktur
- 3: Lenkachse
- 4: gemeinsame steife Querstruktur
- 5: Dämpfungs- und/oder Rückstellelement
- 6: Vorderachse
- 7: Pedal
- 8: Elektromotor

## Patentansprüche

1. Fahrzeug, nämlich Liegerad oder Kite-Buggy, umfassend mindestens zwei Reibungsverminderungsmittel (1), die an einer gemeinsamen Hinterachse und/oder gemeinsamen steifen Querstruktur (4) befestigt sind und/oder steif miteinander verbunden sind, eine tragende Struktur (2), die über eine Lenkachse (3) mit der Hinterachse und/oder gemeinsamen steifen Querstruktur (4) und/oder den mindestens zwei Reibungsverminderungsmitteln (1) schwenkbar verbunden ist und die durch Gewichtsverlagerung in eine Schrägstellung bringbar ist, und mindestens ein Dämpfungs- und/oder Rückstellelement (5), **dadurch gekennzeichnet, dass** die Lenkachse (3) eine Neigung von 20° bis 80°, insbesondere von 40° bis 70°, gegen die Horizontale aufweist, wobei der Winkel der Neigung ausgehend von der Lenkachse in seitlicher Ansicht auf das Fahrzeug mit Vorwärtsfahrrichtung nach links im Uhrzeigersinn bis zur Horizontalen gemessen ist, und dass das mindestens eine Dämpfungs- und/oder Rückstellelement (5) so angeordnet ist, dass das Dämpfungs- und/oder Rückstellelement (5) eine dämpfende und/oder rückstellende Kraft auf eine Auslenkung der Hinterachse und/oder gemeinsamen steifen Querstruktur (4) und/oder der Reibungsverminderungsmittel (1) ausübt und die dämpfende und/oder rückstellende Kraft in einer Ebene senkrecht zur Lenkachse (3) oder mit einem Winkel von kleiner als 30°, insbesondere kleiner als 20°, zu der Ebene senkrecht zur Lenkachse (3) verläuft und/oder das Dämpfungs- und/oder Rückstellelement (5) mit seiner Längserstreckung in einer Ebene senkrecht zur Lenkachse (3) oder mit einem Winkel von kleiner als 30°, insbesondere kleiner als 20°, zu der Ebene senkrecht zur Lenkachse (3) verläuft, wobei das Fahrzeug weiter mindestens ein weiteres Reibungsverminderungsmittel (1), wobei das weitere Reibungsverminderungsmittel (1) steif mit der tragenden Struktur (2) verbunden ist und/oder bei einer Auslenkung der Hinterachse und/oder gemeinsamen steifen Querstruktur (4) und/oder der mindestens zwei Reibungsverminderungsmittel (1) ausschwenkt, wobei eine Sitzfläche zumindest teilweise unterhalb einer Verbindungsebene zwischen einem obersten Punkt des weiteren Reibungsverminderungsmittels und der Hinterachse und/oder gemeinsamen steifen Querstruktur und/oder einem obersten Punkt der mindestens zwei Reibungsverminderungsmittel angeordnet ist und wobei die Hinterachse und/oder gemeinsame steife Querstruktur mit keiner weiteren Lenkvorrichtung verbunden sind.

2. Fahrzeug nach Anspruch 1 **dadurch gekennzeichnet, dass** die Sitzfläche zumindest teilweise unterhalb einer Verbindungsebene zwischen einer Rotationsachse des weiteren Reibungsverminderungsmittels und der Hinterachse und/oder gemeinsamen steifen Querstruktur und/oder der Hinterachse der mindestens zwei Reibungsverminderungsmittel angeordnet ist.

3. Fahrzeug nach einem der vorstehenden Ansprüche, **dadurch gekennzeichnet, dass** die Lenkachse (3) über ein Verbindungselement mit der Hinterachse und/oder gemeinsamen steifen Querstruktur (4) und/oder den mindestens zwei Reibungsverminderungsmitteln (1) verbunden ist.

4. Fahrzeug nach einem der vorstehenden Ansprüche, **dadurch gekennzeichnet, dass** das Fahrzeug weiter mindestens eine Vorderachse (6) umfasst, wobei die Vorderachse (6) steif mit der tragenden Struktur (2) verbunden ist und/oder bei einer Auslenkung der Hinterachse und/oder gemeinsamen steifen Querstruktur (4) und/oder der mindestens zwei Reibungsverminderungsmittel (1) ausschwenkt.

5. Fahrzeug nach einem der vorstehenden Ansprüche, **dadurch gekennzeichnet, dass** die tragende Struktur (2) zumindest teilweise unterhalb einer Verbindungsebene zwischen einem obersten Punkt des weiteren Reibungsverminderungsmittels (1) und der Hinterachse und/oder gemeinsamen steifen Querstruktur (4) und/oder einem obersten Punkt der mindestens zwei Reibungsverminderungsmittel (1) angeordnet ist.

6. Fahrzeug nach einem der vorstehenden Ansprüche, **dadurch gekennzeichnet, dass** das mindestens eine Dämpfungs- und/oder Rückstellelement (5) zwischen der tragenden Struktur (2) und der Hinterachse und/oder gemeinsamen steifen Querstruktur (4) und/oder den mindestens zwei Reibungsverminderungsmitteln (1) angeordnet ist.

7. Fahrzeug nach einem der vorstehenden Ansprüche **dadurch gekennzeichnet, dass** die Längserstreckung des mindestens einen Dämpfungs- und/oder Rückstellelements (5) und/oder die dämpfende und/oder rückstellende Kraft senkrecht oder in einem Winkel von 90° bis 45°, insbesondere von 90° bis 60°, zu der Hinterachse und/oder gemeinsamen steifen Querstruktur (4) verläuft.

8. Fahrzeug nach einem der vorstehenden Ansprüche, **dadurch gekennzeichnet, dass** das Fahrzeug mindestens zwei Dämpfungs- und/oder Rückstellelemente (5) umfasst, wobei mindestens je eins der mindestens zwei Dämpfungs- und/oder Rückstellelemente (5) zu beiden Seiten der Lenkachse (3) mit der tragenden Struktur (2) verbunden ist.

9. Fahrzeug nach einem der vorstehenden Ansprüche, **dadurch gekennzeichnet, dass** das mindestens eine Dämpfungs- und/oder Rückstellelement (5) mindestens eine Feder und/oder mindestens einen Schwingungsdämpfer umfasst.

10. Fahrzeug nach einem der vorherstehenden Ansprüche, **dadurch gekennzeichnet, dass** die Hinterachse und/oder gemeinsame steife Querstruktur (4) und/oder die mindestens zwei Reibungsverminderungsmittel (1) nur über die Lenkachse (3) und das mindestens eine Dämpfungs- und/oder Rückstellelement (5) mit der tragenden Struktur (2) gekoppelt sind oder die Hinterachse und/oder gemeinsamen steife Querstruktur (4) mit keiner weiteren Lenkvorrichtung verbunden ist.

11. Fahrzeug nach einem der vorherstehenden Ansprüche, **dadurch gekennzeichnet, dass** die Reibungsverminderungsmittel (1) als Räder, Skier und/oder Kufen ausgebildet sind.

12. Fahrzeug nach Anspruch 11, **dadurch gekennzeichnet, dass** das Fahrzeug über mindestens ein Pedal (7) und/oder einen Elektromotor (8) angetrieben wird, wobei das mindestens eine Pedal (7) und/oder der Elektromotor (8) das mindestens eine weitere Rad (1) und/oder die mindestens zwei Räder (1) antreibt.

13. Fahrzeug nach einem der Ansprüche 11 oder 12, **dadurch gekennzeichnet, dass** die tragende Struktur (2) und/oder Sitzfläche zumindest teilweise unterhalb einer Ebene angeordnet ist, die tangential zu den obersten Punkten der mindestens zwei Räder (1) verläuft.

14. Verfahren zum Lenken eines Fahrzeugs, nämlich eines Liegerads oder Kite-Buggies, durch Gewichtsverlagerung, wobei das Fahrzeug
- mindestens zwei Reibungsverminderungsmittel (1) umfasst, die an einer gemeinsamen Hinterachse und/oder gemeinsamen steifen Querstruktur (4) befestigt sind und/oder steif miteinander verbunden sind und eine tragende Struktur (2) umfasst, die über eine Lenkachse (3) mit der Hinterachse und/oder gemeinsamen steifen Querstruktur (4) und/oder den mindestens zwei Reibungsverminderungsmitteln (1) schwenkbar verbunden ist und die durch Gewichtsverlagerung in eine Schrägstellung bringbar ist, und
- mindestens ein Dämpfungs- und/oder Rückstellelement (5) umfasst, wobei die Lenkachse (3) eine Neigung von 20° bis 80°, insbesondere von 40° bis 70°, gegen die Horizontale aufweist, wobei der Winkel der Neigung ausgehend von der Lenkachse in seitlicher Ansicht auf das Fahrzeug mit Vorwärtsfahrrichtung nach links im Uhrzeigersinn bis zur Horizontalen gemessen ist, und wobei das mindestens eine Dämpfungs- und/oder Rückstellelement (5) so angeordnet ist, dass das Dämpfungs- und/oder Rückstellelement (5) eine dämpfende und/oder rückstellende Kraft auf eine schwenkende Auslenkung der Hinterachse und/oder gemeinsamen steifen Querstruktur (4) und/oder der Reibungsverminderungsmittel (1) um die Lenkachse ausübt und die dämpfende und/oder rückstellende Kraft in einer Ebene senkrecht zur Lenkachse (3) oder mit einem Winkel von kleiner als 30°, insbesondere kleiner als 20°, zu der Ebene senkrecht zur Lenkachse (3) verläuft und/oder das Dämpfungs- und/oder Rückstellelement (5) mit seiner Längserstreckung in einer Ebene senkrecht zur Lenkachse (3) oder mit einem Winkel von kleiner als 30°, insbesondere kleiner als 20°, zu der Ebene senkrecht zur Lenkachse (3) verläuft, wobei das Fahrzeug weiter mindestens ein weiteres Reibungsverminderungsmittel (1) umfasst, wobei das weitere Reibungsverminderungsmittel (1) steif mit der tragenden Struktur (2) verbunden ist und/oder bei einer Auslenkung der Hinterachse und/oder gemeinsamen steifen Querstruktur (4) und/oder der mindestens zwei Reibungsverminderungsmittel (1) ausschwenkt, wobei eine Sitzfläche zumindest teilweise unterhalb einer Verbindungsebene zwischen einem obersten Punkt des weiteren Reibungsverminderungsmittels und der Hinterachse und/oder gemeinsamen steifen Querstruktur und/oder einem obersten Punkt der mindestens zwei Reibungsverminderungsmittel angeordnet ist und wobei die Hinterachse und/oder gemeinsame steife Querstruktur mit keiner weiteren Lenkvorrichtung verbunden sind und bei dem durch die Gewichtsverlagerung das schwenkende Auslenken der Hinterachse und/oder gemeinsamen steifen Querstruktur (4) und/oder der Reibungsverminderungsmittel (1) um die Lenkachse bewirkt wird.

15. Verfahren zum Lenken eines Fahrzeugs nach Anspruch 14, **dadurch gekennzeichnet, dass** die Gewichtsverlagerung eine Gewichtsverlagerung eines auf der tragenden Struktur (2) befindlichen Lebewesens ist.
